# EUROPÄISCHE PATENTSCHRIFT

(11) **EP 2 072 836 B1**
(45) Veröffentlichungstag und Bekanntmachung des Hinweises auf die Patenterteilung: **31.08.2011**
(21) Anmeldenummer: 08105888.5
(22) Anmeldetag: 28.11.2008
(51) Int. Cl.: F16B 13/14

(54) **Schutzelement**
Protective element
Elément de protection

(30) Priorität: 17.12.2007 DE 102007055835
(43) Veröffentlichungstag der Anmeldung: 24.06.2009
(73) Patentinhaber: HILTI Aktiengesellschaft, 9494 Schaan (LI)
(72) Erfinder: Glogger, Josef, 86807 Buchloe (DE); Wolff, Oliver, 70771 Leinfelden Echterdingen (DE); de Smet, Camiel, 8856 Tuggen (CH)

(56) Entgegenhaltungen:
- EP-A1- 0 222 095
- EP-A1- 1 150 025
- DE-U1- 9 403 384
- FR-A5- 2 159 758

## Beschreibung

Die Erfindung betrifft ein Schutzelement zur Verwendung mit einem in einer aushärtbaren Masse verankerten Befestigungselement, wobei das Schutzelement eine eine Durchführachse definierende Durchführstelle für das Befestigungselement aufweist (FR 2 159 758 A5).

Beispielsweise in bestehende Bauteile oder in Felsuntergründe werden Befestigungselemente, wie z. B. Ankerstangen, Stabstähle und Bewehrungseisen, in zuvor erstellte und beispielsweise mit einer aushärtbaren Masse, wie z. B. mit einem Mörtelsystem oder einem Klebstoff, befüllte Bohrlöcher verankert. Insbesondere bei Überkopfanwendungen kann die beim Einführen des Befestigungselementes in das befüllte Bohrloch austretende Masse die Umgebung oder den Anwender beschmutzen.

Aus der DE 94 03 384 U1 ist ein als Spritzschutzelement ausgebildetes Schutzelement bekannt, das vor dem Einführen eines Befestigungselementes in ein mit einer einen Mehrkomponentenkleber aufweisenden Glaspatrone aushärtbaren Masse befülltes Bohrloch auf das Befestigungselement aufgeschoben wird. Beim Einführen des Befestigungselementes in das befüllte Bohrloch verhindert ein sich entlang der senkrecht beziehungsweise quer zur Durchführachse erstreckenden Ebene verlaufende Abschnitt des Schutzelementes, dass Glassplitter und überschüssige Masse, die aus dem Bohrloch beim Setzen des Befestigungselementes austreten können, die Umgebung beziehungsweise den Anwender beschmutzen.

Nachteilig an der bekannten Lösung ist, dass das mit dem Abschnitt des Schutzelementes auffangbare Massevolumen sehr gering ist und das Entfernen des Schutzelementes von dem Befestigungselement nach Beendigung des Setzvorgangs schwierig ist.

Aufgabe der Erfindung ist es, ein Schutzelement zur Verwendung mit einem in einer aushärtbaren Masse verankerten Befestigungselement zu schaffen, das ein Aufnahmevolumen für austretende Masse aufweist und dabei einfach an dem Befestigungselement montier- und demontierbar ist.

Die Aufgabe ist durch die Merkmale des unabhängigen Anspruchs gelöst. Vorteilhafte Weiterbildungen sind in den Unteransprüchen dargelegt.

Gemäss der Erfindung weist das Schutzelement eine napfförmige Ausbildung mit einer umlaufendenden Aussenwand auf.

Durch die napfförmige Ausbildung steht ein von einem Bodenabschnitt und zumindest einer Aussenwand begrenzter Aufnahmeraum mit einem Aufnahmevolumen für die beim Setzvorgang des Befestigungselementes austretende aushärtbare Masse zur Verfügung, so dass diese seitlich nicht mehr abfliessen und die Umgebung beschmutzen kann. Der Anwender wird somit beim Setzvorgang vor der austretenden aushärtbaren Masse geschützt. Die Höhe der Aussenwand definiert mit der Summe der Flächen in der Ebene das zur Verfügung gestellte Aufnahmevolumen. Wird das Bohrloch mit einer Glaspatrone befüllt, gewährleistet das erfindungsgemässe Schutzelement weiterhin einen Schutz des Anwenders vor allenfalls heraustretenden Glassplittern.

Vorzugsweise nimmt der Abstand der Aussenwand zur Durchführachse in Richtung der Napföffnung zumindest bereichsweise zu. Somit erweitert sich der von der napfförmigen Ausbildung geschaffene Aufnahmeraum zum freien Ende des Aussenwandabschnitts hin, so dass allfällig aus dem Bohrloch leicht seitlich herausspritzende Masse ebenfalls sicher aufgenommen wird und somit die Gefahr einer Verschmutzung der Umgebung und/oder des Anwenders weitgehend ausgeschlossen ist. Vorteilhaft verläuft der Aussenwandabschnitt konisch.

Bevorzugt ist die Aussenwand in Bezug auf die Durchführachse radial umlaufend und umgibt somit die Durchführachse koaxial. Mit dieser in einem Querschnitt des Schutzelementes runden Ausgestaltung ist ein einfaches Handling des Schutzelementes gewährleistet.

Vorzugsweise ist die Aussenwand mit Versteifungen versehen, womit die Aussenwand eine ausreichende Stabilität aufweist und z. B. auch bei grösser dimensionierten Schutzelementen sich nicht unbeabsichtigt ein- oder umfalten kann.

Bevorzugt sind die Versteifungen in Bezug auf die Durchführachse radial umlaufend angeordnet. Besonders vorteilhaft sind die Versteifungen als Rinnen ausgebildet, welche radial umlaufend angeordnet sind. Die Rinnen lassen sich einfach bei der Ausbildung des Schutzelementes ausbilden und erhöhen in vorteilhafter Weise die Stabilität der Aussenwand.

Vorzugsweise ist zumindest die Aussenwand transparent, damit bei einer Überkopfanwendung der gesamte Setzvorgang des Befestigungselementes verfolgt werden kann. In einer vorteilhaften Ausführungsform ist das gesamte Schutzelement transparent. Weiter vorteilhaft ist das Schutzelement aus einem Kunststoff gefertigt, was eine kostengünstige Herstellung gewährleistet.

Eine mittig zur Durchführachse die Durchführstelle umgebende, umlaufende Innenwand ist vorgesehen, welche den Aufnahmeraum des napfförmigen Schutzelementes nach innen begrenzt. Die Innenwand umgibt die Durchführstelle kaminartig. Vorteilhaft verläuft die Innenwand koaxial zur Durchführachse. Mit der Innenwand ist eine innere Begrenzung des Aufnahmeraums geschaffen, die ein Haften der aus dem Bohrloch austretenden Masse im Bereich des Schutzelementes an dem Befestigungselement weitgehend verhindert und somit ein einfaches Entfernen des Schutzelementes von dem Befestigungselement nach Beendigung des Setzvorgangs gewährleistet.

Vorteilhaft weist die Innenwand die Durchführstelle für das Befestigungselement auf, wobei diese vorteilhaft von dem freien Rand der Innenwand umfänglich umschlossen wird. Zumindest die Innenwand des Schutzelementes ist vorteilhaft aus einem elastischen oder federelastischen Material ausgebildet, so dass sich die Grösse einer Durchführöffnung bei der Durchführstelle an den entsprechenden Durchmesser des Befestigungselementes anpassen kann. Alternativ oder ergänzend können ausgehend vom freien Ende der Innenwand verlaufende Längsschlitze vorgesehen sein, welche lammellenartig auslenkbar sind und eine einfache Montage und Demontage des Schutzelementes an dem Befestigungselement sowie ein einfaches Verschieben des Schutzelementes entlang des Befestigungselementes ermöglichen.

Vorzugsweise nimmt der Abstand der Innenwand zur Durchführachse in Richtung der Napföffnung zumindest bereichsweise ab, so dass sich die Innenwand zumindest bereichsweise zu ihrem freien Ende hin verjüngt. Die Durchführstelle für das Befestigungselement ist vorteilhaft am freien Ende der Innenwand ausbildbar. Beim Aufschieben des Schutzelementes auf das Befestigungselement legt sich der freie Rand umfänglich an die Aussenkontur des Befestigungselementes an und dichtet dabei einen allfälligen Spalt zwischen dem freien Rand der Innenwand und der Aussenkontur des Befestigungselementes ab. Nach Beendigung des Setzvorgangs des Befestigungselementes lässt sich das Schutzelement noch wesentlich einfacher von diesem entfernen, da keine ausgetretene Masse entlang der Aussenkontur des Befestigungselementes in einen Bereich zwischen der Innenwand des Schutzelementes und der Aussenkontur des Befestigungselementes haften kann. Weiter kann ein Typ von Schutzelement an Befestigungselementen mit unterschiedlichen Aussendurchmessern vorgesehen werden.

Bevorzugt ist ein vom freien Ende des Innenwandabschnitts ausgehender Bereich mit Abstufungen versehen. Die Abstufungen bilden Ablängmarkierungen, die dem Anwender vorteilhafte Durchmesserbereiche zur Durchführung bestimmter Befestigungselemente anzeigen. Vorteilhaft sind die Abstufungen auf die handelsüblichen Aussendurchmesser von Befestigungselementen abgestimmt. Je nach Art des Befestigungselementes und dem gewähltem Aussendurchmesser kürzt der Anwender das freie Ende des Innenwandabschnitts z. B. direkt auf der Baustelle.

Die Erfindung wird nachstehend anhand eines Ausführungsbeispiels näher erläutert. Es zeigen:
- Fig. 1: Ein erfindungsgemässes Schutzelement im Grundriss;
- Fig. 2: das Schutzelement im Schnitt entlang Linie II-II in Fig. 1; und
- Fig. 3: das Schutzelement in Verwendung mit einem in einer aushärtbaren Masse verankerten Befestigungselement in einem Systemschnitt.

Grundsätzlich sind in den Figuren gleiche Teile mit den gleichen Bezugszeichen versehen.

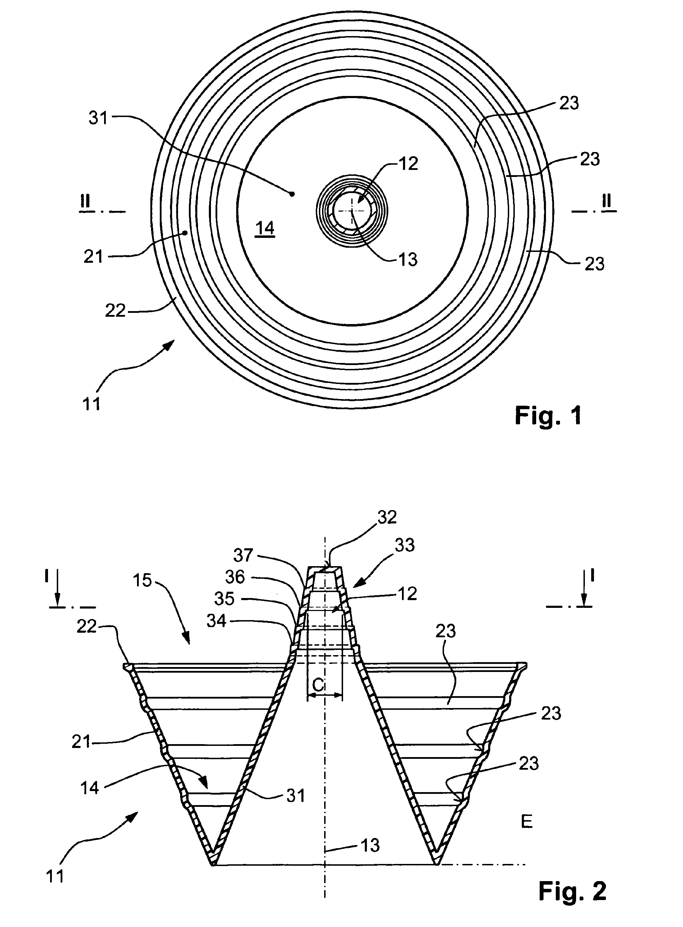

Das in den Figuren 1 und 2 dargestellte Schutzelement 11 ist napfförmig ausgebildet und weist eine eine Durchführachse 13 definierende Durchführstelle 12 für ein hier nicht dargestelltes Befestigungselement auf. Durch die napfförmige Ausbildung ist ein Aufnahmeraum 14 für aus dem Bohrloch beim Setzvorgang austretende aushärtbare Masse 10 geschaffen, der in Bezug auf die Durchführachse 13 von einer beabstandeten und diese koaxial umgebenden beziehungsweise radial umlaufenden Aussenwand 21 begrenzt ist. Der Abstand der Aussenwand 21 zur Durchführachse 13 nimmt in Richtung der Napföffnung 15 kontinuierlich zu. Die Aussenwand 21 ist mit drei Versteifungen 23 versehen, die als radial umlaufende Rinnen ausgebildet sind.

Weiter ist eine mittig zur Durchführachse 13 die Durchführstelle 12 umgebende, koaxial umlaufende Innenwand 31 vorgesehen, die den Aufnahmeraum 14 nach radial innen begrenzt. Der Abstand der Innenwand 31 zur Durchführachse 13 nimmt in Richtung der Napföffnung 15 kontinuierlich ab. Das freie Ende 32 der Innenwand 31 überragt axial das freie Ende 22 der Aussenwand 21 mit einem vom freien Ende 32 der Innenwand 31 ausgehenden Bereich 33, der stufenartig mit Abstufungen 34 bis 37 versehen ist.

Durch Ablängen des freien Endes 32 der Innenwand 31 wird eine Durchführöffnung für das Befestigungselement geschaffen. Wird die Innenwand 31 beispielsweise bei der Abstufung 36 abgelängt, so weist die dadurch geschaffene Durchführöffnung als Durchführstelle 12 einen maximalen Durchmesser C auf, der kleiner als der entsprechende Aussendurchmesser des hindurchgeführten Befestigungselementes ist.

Das gesamte Schutzelement 11 und somit auch die Aussenwand 21 sind aus einem transparenten Kunststoff gefertigt.

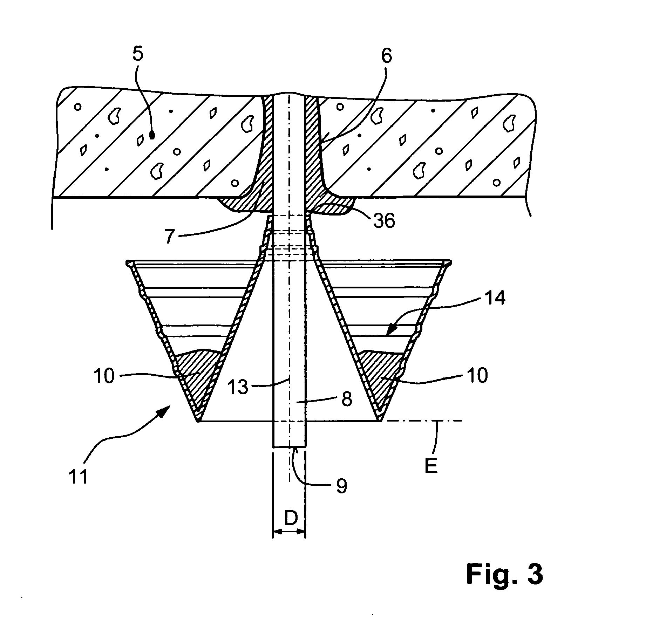

In Figur 3 ist ein Montageschritt mit dem Schutzelement 11 zur Verwendung mit einem in einer aushärtbaren Masse 7 verankerten Befestigungselement 8 dargestellt. Das Befestigungselement 8 ist eine Ankerstange und weist einen Aussendurchmesser D von 10 mm auf. Vorgängig hat der Anwender die Innenwand 31 bei der Abstufung 36 abgelängt, wobei der Durchmesser der dadurch geschaffenen Durchführöffnung als Durchführstelle 12 für das Befestigungselement 8 kleiner als dessen Aussendurchmesser D ist. Das zuvor im Untergrund 5 erstellte Bohrloch 6 wird mit einer ausreichenden Menge von aushärtbarer Masse 7 befüllt. Anschliessend wird das Schutzelement 11 über ein Ende des Befestigungselementes 8 geschoben. Aufgrund des Durchmesserunterschieds zwischen dem Durchmesser der Durchführstelle 12 und dem Aussendurchmesser D des Befestigungselementes 8 liegt das freie Ende der Innenwand 31 satt und dennoch verschiebbar an dem Befestigungselement 8 an, wobei der Spalt zwischen dem Befestigungselement 8 und der Innenwand 31 des Schutzelementes 11 abgedichtet ist.

Beim anschliessenden Einführen des Befestigungselementes 8 in das befüllte Bohrloch 6 wird die dabei austretende Masse 10 vom Schutzelement 11 in dessen Aufnahmeraum 14 aufgenommen. Nach Beendigung des Setzvorgangs wird das Schutzelement 11 durch Verschieben in Richtung des freien Endes 9 des Befestigungselementes 8 von diesem entfernt und kann einfach entsorgt werden. Mit der transparenten Ausbildung des Schutzelementes 11 ist der gesamte Setzvorgang verfolgbar.

## Patentansprüche

1. Schutzelement zur Verwendung mit einem in einer aushärtbaren Masse (7) verankerbaren Befestigungselement (8), wobei
das Schutzelement (11) eine eine Durchführachse (13) definierende Durchführstelle (12) für das Befestigungselement (8) und eine napfförmige Ausbildung mit einer umlaufendenden Aussenwand (21) aufweist, **dadurch gekennzeichnet, dass** eine mittig zur Durchführachse (13) die Durchführstelle (12) umgebende, umlaufende Innenwand (31) vorgesehen ist.

2. Schutzelement nach Anspruch 1, **dadurch gekennzeichnet, dass** der Abstand der Aussenwand (21) zur Durchführachse (13) in Richtung der Napföffnung (15) zumindest bereichsweise zunimmt.

3. Schutzelement nach Anspruch 1 oder 2, **dadurch gekennzeichnet, dass** die Aussenwand (21) in Bezug auf die Durchführachse (13) radial umlaufend ist.

4. Schutzelement nach einem der Ansprüche 1 bis 3, **dadurch gekennzeichnet, dass** die Aussenwand (21) mit Versteifungen versehen ist.

5. Schutzelement nach Anspruch 4, **dadurch gekennzeichnet, dass** die Versteifungen in Bezug auf die Durchführachse (13) radial umlaufend angeordnet sind.

6. Schutzelement nach einem der Ansprüche 1 bis 5, **dadurch gekennzeichnet, dass** zumindest die Aussenwand (21) transparent ist.

7. Schutzelement nach einem der Ansprüche 1 bis 6, **dadurch gekennzeichnet, dass** der Abstand der Innenwand (31) zur Durchführachse (13) in Richtung der Napföffnung (15) zumindest bereichsweise abnimmt.

8. Schutzelement nach einem der Ansprüche 1 bis 7, **dadurch gekennzeichnet, dass** ein freies Ende (32) der Innenwand (31) ein freies Ende (22) der Aussenwand (21) axial überragt.

9. Schutzelement nach einem der Ansprüche 1 bis 8, **dadurch gekennzeichnet, dass** ein vom freien Ende (32) der Innenwand (31) ausgehender Bereich (33) mit Abstufungen (34 bis 37) versehen ist.

## Claims

1. Protective element for use with a fastening element (8) anchorable in a hardenable mass (7), the protective element (11) having a lead through location (12) for the fastening element (8) that defines a lead through axis (13) and being of bowl shaped construction with a circumferentially extending outer wall (21), **characterised in that** an inner wall (31) is provided surrounding and circumferentially extending around the lead through location (12) centrally with respect to the lead through axis (13).

2. Protective element according to claim 1, **characterised in that** the distance of the outer wall (21) from the lead through axis (13), increases in the direction of the bowl opening (15), at least in some regions.

3. Protective element according to claim 1 or 2, **characterised in that** the outer wall (21) extends radially circumferentially with respect to the lead through axis (13).

4. Protective element according to one of claims 1 to 3, **characterised in that** the outer wall (21) is provided with stiffenings.

5. Protective element according to claim 4, **characterised in that** the stiffenings are arranged extending radially circumferentially with respect to the lead through axis (13).

6. Protective element according to one of claims 1 to 5, **characterised in that** at least the outer wall (21) is transparent.

7. Protective element according to one of claims 1 to 6, **characterised in that** the distance of the inner wall (31) from the lead through axis (13), decreases in the direction of the bowl opening (15), at least in some regions.

8. Protective element according to one of claims 1 to 7, **characterised in that** a free end (32) of the inner wall (31) projects axially beyond a free end (22) of the outer wall (21).

9. Protective element according to one of claims 1 to 8, **characterised in that** a region (33) starting from the free end (32) of the inner wall (31) is provided with steps (34 to 37).

## Revendications

1. Elément de protection à utiliser avec un élément de fixation (8) pouvant être ancré dans une masse durcissable (7),
l'élément de protection (11) comportant une position de traversée (12) définissant un axe de traversée (13) pour l'élément de fixation (8) et un élément en forme de cuvette ayant une paroi extérieure circonférentielle (21),
**caractérisé en ce qu'**une paroi intérieure circonférentielle (31) entourant la position de traversée (12) s'étend de manière centrale par rapport à l'axe de traversée (13).

2. Elément de protection selon la revendication 1, **caractérisé en ce que** la distance de la paroi extérieure (21) jusqu'à l'axe de traversée (13) augmente, au moins dans certaines zones, en direction de l'ouverture en forme de cuvette (15).

3. Elément de protection selon la revendication 1 ou 2, **caractérisé en ce que** la paroi extérieure (21) est radialement circonférentielle par rapport à l'axe de traversée (13).

4. Elément de protection selon l'une quelconque des revendications 1 à 3, **caractérisé en ce que** la paroi extérieure (21) est munie de renforts.

5. Elément de protection selon la revendication 4, **caractérisé en ce que** les renforts sont agencés de manière radialement circonférentielle par rapport à l'axe de traversée (13).

6. Elément de protection selon l'une quelconque des revendications 1 à 5, **caractérisé en ce qu'**au moins la paroi extérieure (21) est transparente.

7. Elément de protection selon l'une quelconque des revendications 1 à 6, **caractérisé en ce que** la distance de la paroi intérieure (31) jusqu'à l'axe de traversée (13) diminue, au moins dans certaines zones, en direction de l'ouverture en forme de cuvette (15).

8. Elément de protection selon l'une quelconque des revendications 1 à 7, **caractérisé en ce qu'**une extrémité libre (32) de la paroi intérieure (31) fait axialement saillie au-delà d'une extrémité libre (22) de la paroi extérieure (21).

9. Elément de protection selon l'une quelconque des revendications 1 à 8, **caractérisé en ce qu'**une zone (33) partant de l'extrémité libre (32) de la paroi intérieure (31) est munie de gradins (34 à 37).
